Europäisches Patentamt

(19) European Patent Office

Office européen des brevets

(11) EP 0 412 091 B1

(12) **EUROPEAN PATENT SPECIFICATION**

(45) Date of publication and mention
of the grant of the patent:
**05.02.1997 Bulletin 1997/06**

(21) Application number: **89904442.4**

(22) Date of filing: **28.03.1989**

(51) Int. Cl.⁶: **B32B 1/00**, B32B 7/04

(86) International application number:
**PCT/US89/01293**

(87) International publication number:
**WO 89/09128 (05.10.1989 Gazette 1989/24)**

(54) **WRAP-AROUND HEAT-RECOVERABLE SEALING ARTICLE**

DURCH WÄRME VERFORMBARES UND ABDICHTENDES VERPACKUNGSMATERIAL

ARTICLE SOLVANT THERMO-FORMABLE ENVELOPPANT

(84) Designated Contracting States:
**AT BE CH DE FR GB IT LI NL SE**

(30) Priority: **29.03.1988 US 174758**

(43) Date of publication of application:
**13.02.1991 Bulletin 1991/07**

(73) Proprietor: **RAYCHEM CORPORATION
Menlo Park California 94025 (US)**

(72) Inventors:
• **CHIOTIS, Achilles
Mountain View, CA 94043 (US)**
• **MARTENS, Paul
Fremont, CA 94555 (US)**
• **BACON, Deran
Santa Clara, CA 95050 (US)**

(74) Representative: **Jay, Anthony William et al
Raychem Limited
Intellectual Property Law Department
Faraday Road
Dorcan
Swindon, Wilts SN3 5HH (GB)**

(56) References cited:
FR-A- 2 370 225       US-A- 3 483 285
US-A- 3 847 721       US-A- 4 392 898

## Description

Background of the Invention

This invention relates to enclosing and sealing a substrate, such as a plurality of wires or a splice between two or more wire, and to an assembly comprising a heat recoverable article for effecting such sealing.

When two or more insulated wires are spliced together, the insulation is generally removed from the section of the wires which are to be joined together by soldering, crimping, or the like. After the wires have been spliced it is desirable to insulate the splice area, that is the entire area of the splice and adjacent bared wires. This entire area is referred to herein as the splice. The splice area may also include an electical component such as a fuse, diode or transistor or the like spliced to the wires. It is also desirable to seal the area between adjacent wires of a splice, wire bundle or cable to prevent ingress of water, solvents or other contaminants and migration of such contaminants along the insulation of the individual wires.

Various approaches have been proposed to insulate and seal splices and wire bundles. One approach has been to use a heat recoverable tubular article, optionally coated with a hot melt adhesive or sealant. This requires access to a free end of the wires and installation of the recoverable tubing before the wires are spliced. After the wires are spliced, the tubing is slid over the splice and heat is applied to cause recovery of the tubing and to cause the adhesive or sealant to melt and flow. An example of such a heat recoverable tubular article is sold commercially by Raychem Corporation under the trademarks "FLT", "SCT" and "MVT".

At times it is not convenient or feasible to install the recoverable tube over the wires, particularly when three or more wires are involved or a branch is joined to another wire. The use of a heat recoverable wrap-around article has been proposed for example in U.S. Patents Nos. 3,847,721 to Evans and 3,899,807 to Sovish. Evans discloses articles rendered involutely heat recoverable by differentially annealing a molecularly orientated unitary polymeric layer so as to provide an anisotrophic gradient through the thickness thereof. Sovish et al discloses articles rendered involutely heat recoverable by lamination of a first heat recoverable layer to a second, relatively non-heat recoverable layer which resists linear recovery of the first such that the laminated article curls upon recovery. It is believed that the Evans and Sovish et al articles have not met with commercial success primarily due to the circumstance that it is difficult to control the final shape of the article.

Another device which is recoverable to form an enclosing tube is U.S. Patent No. 3,83,285 to Foley. The device is used as a clamp for encircling wires or cables. U.S. Patent No. 3,620,896 to Glasgow also discloses a cable clamp. The use of an adhesive to bond the wraparound article to itself and to the underlying substrate is mentioned. Other wrap-around articles are disclosed in U.S. Patent Nos. 2,138,568 to Brauduberger and 3,416,991 to Yoshimura and British Patent No. 1,091,588 to Toyoba. FR-A-2370225 discloses a tubular assembly for enclosing a sealing or substrate having an overlap to provide for expansion of the tubular assembly. It does not disclose a wrap around assembly.

None of these references address the problem of sealing a plurality of wires or a splice.

This invention provides an assembly comprising a heat recoverable wrap-around article and a sealant for providing a seal between a plurality of wires, a splice between two or more wires or other substrate.

One aspect of this invention comprises an assembly suitable for enclosing and sealing a substrate, characterised in that said assembly comprising :

(a) a sheet of polymeric material, said sheet being capable upon application of heat of assuming an overlapped tubular configuration having an angle of overlap between about 25° and about 360° and defining a volume, V1, said sheet having at one end thereof an involuted curled section;

(b) a sealant adapted to be positioned within said involuted curled section, the volume, V2, of the sealant being at least as great as the difference between the volume, V1 and the volume, V3, of the substrate to be enclosed;

wherein the hot modulus, M'100, of said sheet and the melt flow index, MFI, of the sealant is such that:

$$M'_{100} \geq \frac{1}{[K1 \times \log MFI] - K2}$$

where K1 is between about 0.001 and about 0.015 and K2 is between about 0.001 and about 0.020.

Another aspect of this invention comprises a method of and sealing a substrate, characterised in that the method comprises :

(A) positioning around the substrate a heat recoverable article comprising a sheet of polymeric material, said sheet being capable upon application of heat thereto assuming an overlapped tubular configuration having an angle of overlap between about 25° and about 360° and defining a volume, V1 said sheet having at one end thereof an involuted curled section, said article being positioned around the substrate so that the involuted curled section substantially surrounds the substrate;

(B) positioning a sealant so that it substantially surrounds said substrate within the involuted curled section, the volume, V2, of the sealant being at least as great as the difference between the volume, V1, and the volume, V3, the substrate to be enclosed;

the hot modulus, $M'_{100}$ of said sheet and the melt flow index, MFI, of the sealant being such that:

$$M'_{100} \geq \frac{1}{[K1 \times \log MFI] - K2}$$

where K1 is between about 0.0001 and about 0.015 and K2 is between about 0.001 and about 0.020.

(c) heating the article to cause it to recover and substantially completely surround the substrate;

and

(D) continuing to heat the article to cause the sealant to melt and flow and seal substantially the entire volume within the recovered article.

The substrate can be for example, a plurality of wires, a splice between two or more wires or an electrical component. In a further embodiment, a gel having a specified cone penetration and elongation is used in place of the sealant.

The involuted curled section preferably has an inner diameter equal to or greater than the substrate, i.e. the splice, wires, or electrical component to be enclosed, at its largest point.

Fig. 1-3 illustrate a heat recoverable article suitable for use in this invention, installation of that article over a wire splice and the resulting sealed splice.

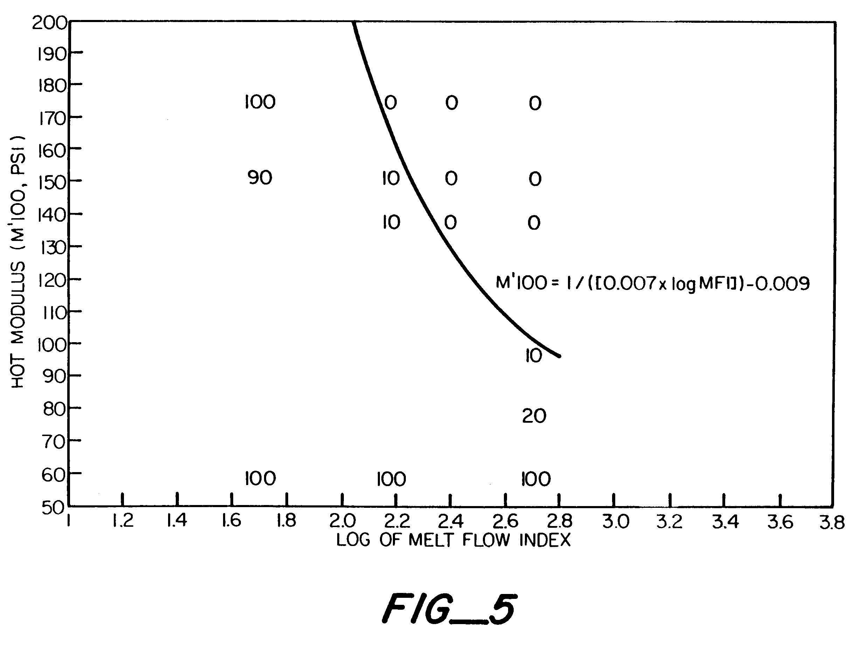

Fig. 4-5 are graphs showing the hot modulus/melt flow index failure envelope for articles of this invention utilizing polyvinylidene fluoride and polyethylene, respectively, as the polymeric sheet.

The assembly of this invention comprises an article capable of asuming a spiral configuration and a sealant. The article comprises a sheet of polymeric material having an involuted curled section at one end thereof. The polymeric material is crosslinked and preferably is selected from the group consisting of polyethylene, vinylidene fluoride polymers, including homopolymers and thermoplastic copolymers, nylon, such as nylon 11 or nylon 12, and polyesters, such as polybutylene terephthalate. Any other polymer capable of having elastic memory imparted thereto can be used.

The polymer is generally used together with various additives and fillers, including for example, antioxidants such as alkylated phenols, e.g. those commercially available as Goodritte 3125, Irganox 1010, Irganox 1035, Irganox 1076, Irganox 1093, Vulkanox BKF, organic phosphite or phoshates, e.g. dilauryl phosphite, Mark 1178, alkylidene polyphenols, e.g. Ethanox 330, thio-bis alkalated phenol, e.g. Santonox R, dilauryl thio-dipropionate, e.g. Carstab DLTDP, dimyristyl thiodipropionate, e.g. Carstab DMTDP, dimyristyl thiodipropionate, e.g. Carstab STDP, amines, e.g. Wingstay 29 etc; UV stabilizers such as [2,2'-thio-bis(4-t-octylphenolato)] n-butylamine nickel, Cyasorb UV 1084, 3,5-ditertiarybutyl-phydroxybenxoic acid, UV Chek AM-240; flame retardents such as decabromodiphenyl ether, perchloropentacyclodecane, 1,2-bis (tetra bromophthalimido) ethylene; pigments such as titanium dioxide, antimony trioxide, zinc oxide, iron oxide, etc, and the like. Mixtures of such additives and fillers can be used.

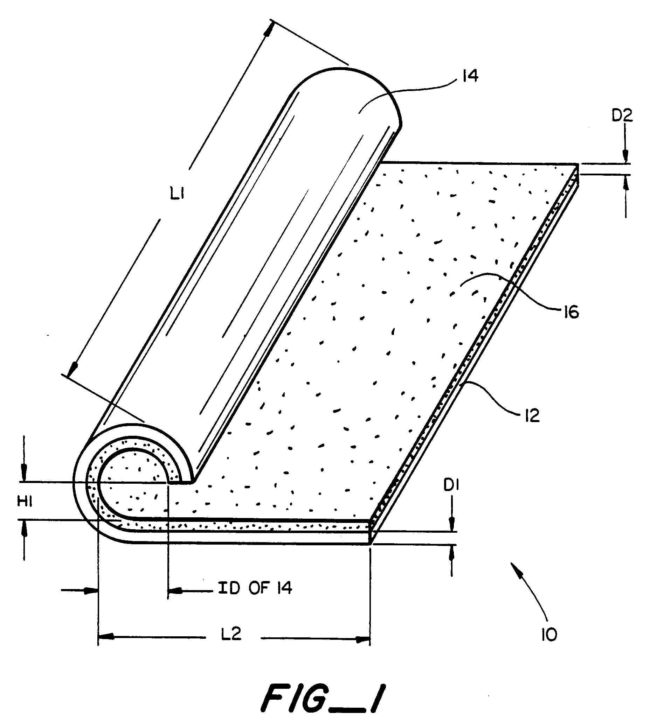

Fig. 1 illustrates a typical article of this invention. In this embodiment, a layer of sealant is applied to the inner surface of the involuted curled section of the article. In Fig.1, the wrap-around article 10 of this invention comprises a strip of heat-recoverable polymeric material 12, one end of which is in the shape of an involuted curl, 14. The inner diameter of the involuted curled section preferably is at least as great as the outer diameter of the substrate, i.e. the wires, splice or electrical component should be substantially completely encircled by the involuted curled section when this section is placed therearound. As shown in Fig. 1, there is preferably a gap, $H_1$, between the end of the curl and the sheet. The gap preferably is large enough to permit the wires or splice to be readily slid into the curl yet small enough to retain the wires or splice inside the curled section during installation. The size of the gap depends on the number of wires, the size of the wires and/or the splice or electrical component spliced between the wires. In general, the gap should be between about 70% and about 100% of the outer diameter of the largest point of the substrate to be enclosed, and preferably between about 80% and about 90%.

The inner surface of the involuted curl section is coated with an sealant, 16. The melt flow index of the sealant should be at least about 65 and more preferably at least about 100 and most preferably at least about 250. The melt flow index of the sealant depends on its composition, whether it has been crosslinked and if crosslinked, to what extent.

It has been found that to ensure proper sealing of the wires or splice, the melt flow index, MFI of the sealant and the hot modulus, $M'_{100}$, of the polymeric sheet should be such that the following relationship is satisfied:

$$M'_{100} \geq \frac{1}{[K1 \times \log MFI] - K2}$$

where K1 is between about 0.0001 and about 0.015, preferably between about 0.0024 and about 0.0106 and more preferably between about 0.0047 and about 0.013 and especially between about 0.0065 and about 0.0090; and K2 is between about 0.001 and about 0.020, preferably betwen about 0.003 and about 0.017, more preferably between about 0.006 and about 0.013 and especially between about 0.008 and 0.012. The melt flow index is determined using ASTMD 1238-70 (as modified in "Elvax" Resins Determination of Melt Index, Technical Information Bulletin of du Pont dated 5/23/77).

In other embodiments of the invention, the sealant need not be coated on the inner surface of the curled section. For example, the sealant can be in the form of an extruded profile which surrounds the wire or wires, or in the form of a sheet or tape which can be wrapped around the wires and the crimp, or the like.

The amount of sealant used within the involuted curled section should completely seal the wires, splice or electrical component after the article has recovered. Thus the volume of sealant, V1, should be at least equal to the difference in volume between the volume of the recovered article V2, and the volumes of the wires of the splice, V3, to be protected. Too little sealant will result in incomplete sealing while excess adhesive will be forced from the spliced area on heating and recovery of the article. The sealant is preferably a heat activatable adhesive, such as a hot melt adhesive, or mastic. On heating, the adhesive melts and flows around and between the wires of the splice. On subsequent cooling the adhesive solidifies or becomes sufficiently viscous that it seals the entire volume within the recovered article. It also adheres to the wires and wire insulation as well as the inner surface of the article water and prevents water and solvents, if present from wicking or traveling along the wires.

An alternate material having adhesive properties that can be used as a sealant in this invention comprises a polymeric gel. It is preferred to use a gel of any of the types described in US Patents Nos. 4,600,261 and 4,634.207 and European Published patent application No 174,165 to Chang, et al, the disclosures of which are incorporated herein by reference. Particularly preferred is a material having a cone penetration between 80 and 350($10^{-1}$mm) preferably between 100 and 350($10^{-1}$mm), more preferably between 200 and 300 ($10^{-1}$mm) and most preferably between 240 and 270($10^{-1}$mm); and an and ultimate elongation of a least 50%, preferably in excess of 100%, more preferably in excess of 200-300%, and possibly in excess of 500%. All cone penetration values cited herein are determined in accordance with American National Standard Designation ASTM D217-68 on an undisturbed sample at 70°F ±5°F using a standard 1:1 scale cone (cone weight 102.5g, shaft weight 47.5g), the penetration being measured after five seconds. Also, ultimate elongations are determined in accordance with the American National Standard Designation ASTM D638-80, at 70° ±5°F, using a Type numeral 4 dye to cut the sample and at a speed of 50cm/min. The gel can comprise either a urethane, silicone, or a non-silicone liquid rubber with low or no unsaturation prior to crosslinking which is then crosslinked, a preferred non-silicone liquid rubber being liquid butyl rubber.

The gel materials readily conform to the wires or splice to provide a seal. The amount of gel used within the involuted curled section should be at least equal to the difference between the volume $V_1$ of the recovered article and the volume V3 of the wires to be enclosed. The gel does not melt and flow when heat is applied but conforms to fill the space within spiral tube around the wires.

The article is formed of a polymeric sheet which has been rendered heat recoverable. Heat-recoverable articles are articles, the dimensional configuration of which may be made substantially to change when subjected to heat treatment. Usually these articles recover, on heating, towards an original shape from which they have previously been deformed. The article of this invention recovers to a spiral tubular configuation. During the manufacture thereof, as discussed below, it is formed into the shape of a spiral tube and then deformed into a more open spiral or a planar configuration.

The article of this invention can be prepared by extruding a tube of the desired material, and splitting the tube longitudinally. The longitudinal edges of the slit tubing are overlapped to form a spiral. The angle of overlap of the spiral should be between about 25° and about 360°, preferably between about 45° and 230°. The polymeric material is then crosslinked for example by use of a suitable crosslinking agent, such as a peroxide or amine, or by irradiation. Any other method of preparing a spiral tube of polymeric material can be used.

In a preferred embodiment, the composition is crosslinked by irradiation. The dosage employed in the irradiation step is generally below about 50 Mrads to ensure that the polymer is not degraded by excessive irradiation. The dosage preferably employed depends upon the extent of crosslinking desired, balanced against the tendency of the polymer to be degraded by high doses of irradiation. Suitable dosages are generally in the range 2 to 40 Mrads, for example 2 to 30 Mrads, preferably 3 to 20 Mrads, especially 4 to 25 or 4 to 20 Mrads, particularly 4 to 15 Mrads. The ionising radiation can for example be in the form of accelerated electrons or gamma rays. Irradiation is generally carried out at about room temperature, but higher temperatures can also be used.

Prior to irradiation it is preferred to incorporate a crosslinking agent into the composition. Preferred radiation crosslinking agents contain carbon-carbon unsaturated groups in a molar percentage greater than 15, especially greater than 20, particulary greater than 25, based on the total molar amount of (A) and (B). In many cases the crosslinking agent contains at least two ethylenic double bonds, which may be present, for example, in allyl, methallyl, propargyl, or vinyl groups. We have obtained excellent results with crosslinking agents containing at least two allyl groups, especially three or four allyl groups. Particulary preferred crosslinking agents are triallyl cyanurate (TAC) and triallyl isocyanurate (TAIC); other specific cross-linking agents include triallyl trimellitate, triallyl trimesate, tetrallyl pyromellitate, the diallyl ester of 1,1,3-trimethyl-5-carboxy-3(p-carboxyphenyl) indan.

The polymeric material is crosslinked to provide a hot modulus of at least 85. The hot modulus was determined at temperature above the melting point of the polymer at which a further increase in temperature does not result in a significant change in the modulus. This modulus is referred to herein as $M_{100}$ and is a measurement of the stress required to elongate a resin by 100% (or to rupture if 100% elongation is not attainable). Higher values obtained from this test indicated increased resistance to elastic deformation and a greater degree of crosslinking. The modulus measurement expressed as the $M'_{100}$ value can be calculated by:

$$M'_{100} = \frac{\text{stress in pounds to elongate sample by 100\%}}{\text{initial cross-sectional area in square inches}}$$

Should the sample rupture prior to 100% elongation, the $M'_{100}$ is calculated using the equation:

$$M'_{100} = \frac{\dfrac{\text{stress in pounds to elongate sample by 100\%}}{\text{elongation at rupture}}}{\text{initial cross-sectional area in square inches}}$$

After the crosslinking step, the spiral tubing is then heated to a temperature above the melting point of the polymer and flattened to a planar configuration. While substancially completely flattening of the tube to a planar configuration is preferred, the spiral tube can be deformed at this stage to an open spiral tube configuration, e.g. to a "C" configuration, if desired.

The sealant can be applied at this stage to the inner surface of the article, i.e. that surface of the article which was the inner surface the spiral tube. If desired, the sealant can be coextruded with the polymeric material into tubing initially or positioned within the involuted curled section at any time up to and including installation of the article. The inner end section of the tubing is then heated causing it to recover toward its spiral configuration creating an involuted curled end section.

As discussed above, the inner diameter of the resulting curled section preferably is greater than the outer diameter of the wires and or splice at its largest point. Further the gap between the end of the curl and the sheet should be less than the outer diameter of the wire or splice at its largest point.

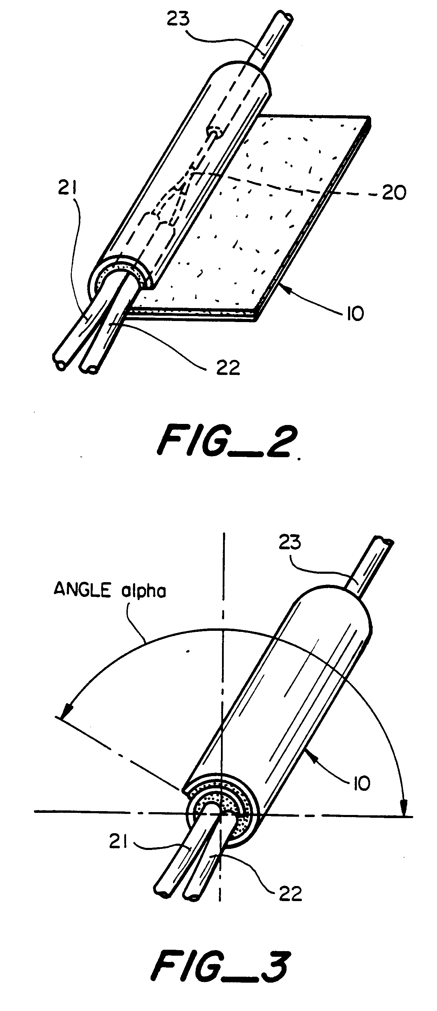

Fig. 2 shows installation of the article 10 around a splice 20 wires 21, 22 and 23. The involuted curled section of article 10 is positioned around the splice. It is to be noted that the inner diameter of the involuted curled section is, in this embodiment, at greater than the splice at its largest point. When heat is applied to the article, it recovers into a final configuration as shown in Fig. 3.

In Fig. 3, recovered article 10 has an angle of overlap, 2, of about 150°. Article 10 is shown surrounding a splice between wires 21, 22 and 23.

The following examples illustrate the preparation of articles of this invention and their use in covering and sealing splices between two or more wires.

Example 1.

A tubing of polyvinylidene fluoride containing a crosslinking promoter was extruded using a 2 inch extruder. The tubing was slit longitudinally at the exit of the die. The slit tubing was passed through a series of sizing dies to obtain a spiral tubing having an angle of overlap of about 135° and a wall thickness of 0.559mm (0.022").

Samples of the tubing was then irradiated in an electron beam accelerator to doses of 5, 12, 18 and 25 Mrads. The hot modulus of each was determined as set forth above. The hot modulus for the samples were 0.39, 0.62, 0.89 and 1.03 MPa (85, 90, 130 and 150 psi) respectively.

Each spiral tubing sample was then heated and flattened. A hot melt adhesive was then applied to each sample. The hot melt adhesives used were : an ethylene/vinyl acetate copolymer having a melt flow index of 50 (Elvax 40 commercially available from E.J. duPont de Nemous and Co.), an ethylene (vinyl acetate/acid terpolymer having a melt flow index of 150 (Elvax 4320, also available from du Pont), and a blend of a polyamide, an ethylene/vinyl acetate copolymer and an ethylene/vinyl acetate/acid terpolymer having a melt flow index of 150.

Heat was then applied to one inch regions of the sheet causing it to form an involuted curl. Each finished article was as shown in Fig. 1 and had the dimensions.

$$L_1 = 5.08\text{cm (2")}$$

$$L_2 = 1.39\text{cm (0.549")}$$

$$d_1 = 0.56\text{cm (0.022")}$$

$$d_2 = 0.51\text{cm (0.020")}$$

$$ID_1 = 0.34\text{cm (0.135")}$$

$$H_1 = 0.24\text{cm (0.095")}$$

A number of sample splices were prepared, each between two 1.17mm (18AWG) wires insulated with crosslinked polyethylene by removing 1.52cm (0.600") of the insulation of the wires and then joining the ends of the wires by ultrasonic welding.

The curled end section of each sample article was positioned over a sample splice and the assembly was heated using an infrared heater at 800°C for 12 seconds to cause the article to recover around the splice.

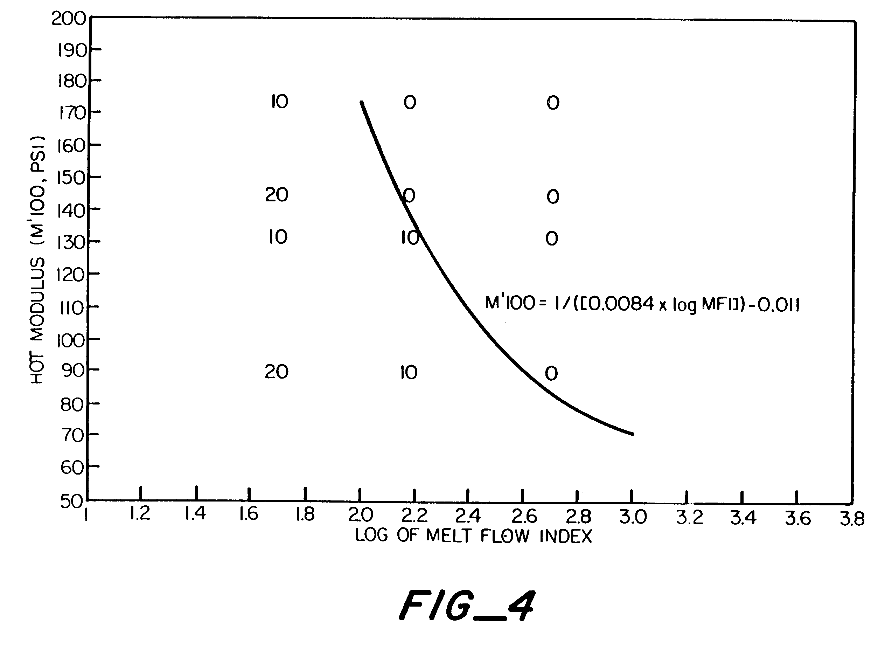

Each sample was tested by immersing the splice in a 5% sodium chloride aqueous solution for 24 hours at room temperature and then measuring the current between the NaCl solution and the conductors of the splice at 50 volts, direct current. The splice passed the test if the current was 0.250 micro-amps or less. The failure rates were plotted as a function of the hot modulus of the tubing and melt flow index of the adhesive as shown in Figure 4. Samples within the area to the right of the curve showed no failures while those to the left showed a failure rate of at least 10%. It was determined that for 0 failure rate the following relationship was satisfied :

$$M'_{100} \geq \frac{1}{0.0084 \log \text{MFI} - 0.011}$$

Example 2.

A spiral tubing of polyethylene containing a crosslinking promoter was extruded, using a 1.91cm (3/4") extruder. The tubing was slit longitudinally and as in Example 1 passed through sizing dies to form a spiral tubing.

The spiral tubing having an angle of overlap of 90° was then irradiated to dosages of 10, 20, 40 and 60 Mrads, to give hot modulus of 0.41, 0.48, 0.86, and 1.1 MPa (60, 70, 125, and 160 psi). Heat recoverable articles were prepared as in Example 1 using the same adhesives and each sample installed on 2:1 wire splice. The failure rates were plotted and it was determined that at zero failure rate, the following relationship was satisfied.

$$M'_{100} \geq \frac{1}{0.007 \log \text{MPI} - 0.009}$$

Claims

1. An assembly suitable for enclosing and sealing a substrate, characterised in that said assembly comprising :

(a) a sheet (12) of polymeric material, said sheet being capable upon installation over the substrate and on application of heat thereto of assuming an overlapped tubular configuration having an angle of overlap between about 45° and about 180° and defining a volume, V1, said sheet having at one end thereof an involuted curled section (4); and

(b) a sealant (16) adapted to be positioned within said involuted curled section (14), the volume, V2, of the sealant being at least equal to the difference between, V1 and the volume, V3, of the substrate to be enclosed;

wherein the hot modulus, $M'_{100}$, of said sheet and the melt flow index, MFI, of the sealant is such that :

$$M'_{100} \geq \frac{1}{[K1 \times \log MFI] - K2}$$

where K1 is between about 0.0001 and about 0.015 and K2 is between about 0.001 and about 0.020.

2. An assembly in accordance with Claim 1 wherein the substrate is a cable splice, wherein the inner diameter of said involuted curled section (14) is at least equal to the outer diameter of the splice at its largest point.

3. An assembly in accordance with Claim 1 wherein said sealant (16) is coated on the inner surface of said involuted curled section (14) and extends along that surface of said sheet.

4. An assembly in accordance with Claim 1 wherein the $M'_{100}$, of the sheet is at least about 0.59 MPa (85 psi).

5. An assembly in accordance with Claim 1 wherein the melt flow of the adhesive is such that log MFI is at least about 2.

6. An assembly in accordance with Claim 1 wherein the edge of involuted curled section (14) is spaced from the surface of the adhesive coated sheet (12) by a distance less than the diameter of the splice at its largest point.

7. An assembly in accordance with Claim 1 wherein said sheet comprises a crosslinked polymer selected from the group consisting of polethylene, vinylidene fluoride, ethylene-tetrafluoroethylene copolymers, nylons and polyesters.

8. An assembly in accordance with Claim 1 wherein said sealant comprises a hot melt adhesive.

9. An assembly in accordance with Claim 8 wherein the hot melt adhesive comprises a polyamide, and ethylene-vinyl acetate copolymer, an ethylene-vinyl acetate-acid terpolymer, or mixtures thereof.

10. An assembly in accordance with Claim 1 wherein $K_1$ is between about 0.0036 and about 0.018.

11. An assembly in accordance with Claim 1 wherein $K_2$ is between about 0.003 and about 0.017.

12. An assembly in accordance with Claim 1 wherein $K_2$ is between 0.0053 and 0.013 and $K_2$ is between about 0.006 and about 0.013.

13. An assembly in accordance with Claim 1, wherein the substrate is a splice between two or more wires, a plurality of wires or an electrical component.

14. A method of enclosing and sealing a substrate, characterised in that it comprises :

(A) positioning around the substrate a heat recoverable article (10) comprising a sheet (12) of polymeric material, said sheet being capable upon application of heat thereto of assuming an overlapped tubular configuration having an angle of overlap between about 45° and about 180° and defining a volume, V1, said sheet having at one end thereof an involuted curled section (16), said article being positioned around the substrate so that the involuted curled section substantially surrounds the substrate; and

(B) positioning a sealant (16) so that it substantially surrounds said substrate within said involuted curled section, the volume, V2, of the sealant being at least equal to the difference between the volume, V1, and the volume, V3, of the substrate to be enclosed;

wherein the hot modulus, $M'_{100}$, of said sheet and the melt flow index, MFI, of the sealant being such that:

$$M'_{100} \geq \frac{1}{[K1 \times \log MFI] - K2}$$

where K1 is between about 0.001 and about 0.015 and K2 is between about 0.001 and about 0.020;

(C) heating the article to cause it to recover and substantially completely surround the substrate;

and

(D) continuing to heat the article to cause the sealant to melt and flow and seal substantially the entire volume within the recovered article.

15. An assembly in accodance with Claim 1, wherein the sealant comprises a gel having a cone penetration between 80 and 350 (10-1mm) and an ultimate elongaton of at least 50%.

**Patentansprüche**

1. Anordnung, die geeignet ist, um ein Substrat zu umschließen und abzudichten,
dadurch gekennzeichnet,
daß die Anordnung folgendes aufweist:

(a) einen Flächenkörper (12) aus polymerem Material, wobei der Flächenkörper imstande ist, bei der Installation über dem Substrat und beim Aufbringen von Wärme darauf eine überlappende rohrförmige Konfiguration anzunehmen, die einen Überlappungswinkel zwischen ca. 45° und ca. 180° hat und ein Volumen V1 bildet, wobei der Flächenkörper an seinem einen Ende einen gewickelten eingerollten Abschnitt (14) hat; und

(b) ein Dichtungsmittel (16), das geeignet ist, um innerhalb des gewickelten eingerollten Abschnitts (14) positioniert zu werden, wobei das Volumen V2 des Dichtungsmittels wenigstens gleich der Differenz zwischen V1 und dem Volumen V3 des zu umschließenden Substrats ist;

wobei der Modul $M'_{100}$ des Flächenkörpers im heißen Zustand und der Schmelzfluß-Index MFI des Dichtungsmittels derart sind, daß die folgende Relation gilt:

$$M'_{100} \geq \frac{1}{[K1 \times \log MFI] - K2}$$

wobei K1 zwischen ca. 0,0001 und ca. 0,015 ist und K2 zwischen ca. 0,001 und ca. 0,020 ist.

2. Anordnung nach Anspruch 1,
wobei das Substrat eine Kabelspleißstelle ist, wobei der Innendurchmesser des gewickelten eingerollten Abschnitts (14) wenigstens gleich dem Außendurchmesser der Spleißstelle an ihrer größten Stelle ist.

3. Anordnung nach Anspruch 1,
wobei das Dichtungsmittel (16) auf die innere Oberfläche des gewickelten eingerollten Abschnitts (14) aufgetragen ist und entlang dieser Oberfläche des Flächenkörpers verläuft.

4. Anordnung nach Anspruch 1,
wobei $M'_{100}$ des Flächenkörpers wenigstens ca. 0,59 MPa (85 psi) ist.

5. Anordnung nach Anspruch 1,
wobei der Schmelzfluß des Klebstoffs derart ist, daß log MFI wenigstens ca. 2 ist.

6. Anordnung nach Anspruch 1,
wobei der Rand des gewickelten eingerollten Abschnitts (14) von der Oberfläche des mit Klebstoff beschichteten Flächenkörpers (12) um eine Strecke beabstandet ist, die kleiner als der Durchmesser der Spleißstelle an ihrem größten Punkt ist.

7. Anordnung nach Anspruch 1,
wobei der Flächenkörper ein vernetztes Polymer aufweist, das aus der Gruppe ausgewählt ist, die aus Polyethylen, Vinylidenfluorid, Ethylen-Tetrafluorethylen-Copolymeren, Nylons und Polyestern besteht.

8. Anordnung nach Anspruch 1,
wobei das Dichtungsmittel einen Schmelzklebstoff aufweist.

**9.** Anordnung nach Anspruch 8,
wobei der Schmelzklebstoff ein Polyamid, ein Ethylen-Vinylacetat-Copolymer, ein Ethylen-Vinylacetat-Säure-Terpolymer oder Gemische davon aufweist.

**10.** Anordnung nach Anspruch 1,
wobei K1 zwischen ca. 0,0036 und ca. 0,018 ist.

**11.** Anordnung nach Anspruch 1,
wobei K2 zwischen ca. 0,003 und ca. 0,017 ist.

**12.** Anordnung nach Anspruch 1,
wobei K1 zwischen 0,0053 und 0,013 und K2 zwischen ca. 0,006 und ca. 0,013 ist.

**13.** Anordnung nach Anspruch 1,
wobei das Substrat eine Spleißstelle zwischen zwei oder mehreren Drähten, einer Vielzahl von Drähten oder einem elektrischen Bauelement ist.

**14.** Verfahren zum Umschließen und Aodichten eines Substrats,
dadurch gekennzeichnet,
daß es folgendes aufweist:

(A) um das Substrat herum wird ein wärmerückstellbarer Gegenstand (10) positioniert, der einen Flächenkörper (12) aus polymerem Material aufweist, wobei der Flächenkörper imstande ist, beim Aufbringen von Wärme darauf eine überlappende rohrförmige Konfiguration anzunehmen, die einen Überlappungswinkel zwischen ca. 45° und ca. 180° hat und ein Volumen V1 bildet, wobei der Flächenkörper an seinem einen Ende einen gewickelten eingerollten Abschnitt (14) hat, wobei der Gegenstand so um das Substrat herum positioniert wird, daß der gewickelte eingerollte Abschnitt das Substrat im wesentlichen umgibt; und

(B) ein Dichtungsmittels (16) wird so positioniert, daß es das Substrat innerhalb des gewickelten eingerollten Abschnitts im wesentlichen umgibt, wobei das Volumen V2 des Dichtungsmittels wenigstens gleich der Differenz zwischen dem Volumen V1 und dem Volumen V3 des zu umschließenden Substrats ist;

wobei der Modul $M'_{100}$ des Flächenkörpers im heißen Zustand und der Schmelzfluß-Index MFI des Dichtungsmittels derart sind, daß folgende Relation gilt:

$$M'_{100} \geq \frac{1}{[K1 \times \log MFI] - K2}$$

wobei K1 zwischen ca. 0,001 und ca. 0,015 ist und K2 zwischen ca. 0,001 und ca. 0,020 ist;

(C) der Gegenstand wird erwärmt, um zu bewirken, daß er sich rückstellt und das Substrat im wesentlichen vollständig umgibt;

und

(D) der Gegenstand wird weiter erwärmt, um zu bewirken, daß das Dichtungsmittel schmilzt und fließt und im wesentlichen das gesamte Volumen innerhalb des rückgestellten Gegenstands abdichtet.

**15.** Anordnung nach Anspruch 1,
wobei das Dichtungsmittel ein Gel aufweist, das eine Konuspenetration zwischen 80 und 350 ($10^{-1}$ mm) und eine Bruchdehnung von wenigstens 50 % hat.

**Revendications**

**1.** Ensemble convenant pour envelopper et sceller un substrat, caractérisé en ce que ledit ensemble comporte :

(a) une feuille (12) de matière polymérique, ladite feuille étant capable, lors d'une mise en place sur le substrat et lors de l'application de chaleur à cette feuille, de prendre une configuration tubulaire à recouvrement ayant un angle de recouvrement compris entre environ 45° et environ 180° et définissant un volume, V1, ladite feuille étant, à l'une de ses extrémités, un tronçon (14) enroulé de façon involutive ; et

(b) un matériau d'étanchéité (16) adapté pour être positionné à l'intérieur dudit tronçon (14) enroulé de façon involutive, le volume, V2, du matériau d'étanchéité étant au moins égal à la différence entre V1 et le volume, V3, du substrat devant être enveloppé ;

dans lequel le module à chaud, $M'_{100}$, de ladite feuille et l'indice de fluidité à l'état fondu, MFI, du matériau d'étanchéité sont tels que :

$$M'_{100} \geq \frac{1}{[K1 \times \log MFI] - K2}$$

où K1 est compris entre environ 0,0001 et environ 0,015 et K2 est compris entre environ 0,001 et environ 0,020.

2. Ensemble selon la revendication 1, dans lequel le substrat est une épissure de câble, le diamètre intérieur dudit tronçon (14) enroulé de façon involutive étant au moins égal au diamètre extérieur de l'épissure à son point le plus grand.

3. Ensemble selon la revendication 1, dans lequel ledit matériau d'étanchéité (16) est appliqué sur la surface intérieure dudit tronçon (14) enroulé de façon involutive et s'étend le long de cette surface de ladite feuille.

4. Ensemble selon la revendication 1, dans lequel la valeur $M'_{100}$ de la feuille est d'au moins environ 0,59 MPa (85 psi).

5. Ensemble selon la revendication 1, dans lequel la fluidité à l'état fondu de l'adhésif est telle que log MFI est d'au moins environ 2.

6. Ensemble selon la revendication 1, dans lequel le bord du tronçon (14) enroulé de façon involutive est espacé de la surface de la feuille (12) revêtue d'adhésif d'une distance inférieure au diamètre de l'épissure en son point le plus grand.

7. Ensemble selon la revendication 1, dans lequel ladite feuille comprend un polymère réticulé choisi dans le groupe constitué d'un polyéthylène, de fluorure de vinylidène, de copolymères éthylène-tétrafluoréthylène de Nylons et de polyesters.

8. Ensemble selon la revendication 1, dans lequel ledit matériau d'étanchéité comprend un adhésif thermofusible.

9. Ensemble selon la revendication 8, dans lequel l'adhésif thermofusible comprend un polyamide, et un copolymère éthylène/acétate de vinyle, un terpolymère éthylène/acétate de vinyle/acide, ou des mélanges de ceux-ci.

10. Ensemble selon la revendication 1, dans lequel K1 est compris entre environ 0,0036 et environ 0,018.

11. Ensemble selon la revendication 1, dans lequel K2 est compris entre environ 0,003 et environ 0,017.

12. Ensemble selon la revendication 1, dans lequel K2 est compris entre 0,0053 et 0,013 et K2 est compris entre environ 0,006 et environ 0,013.

13. Ensemble selon la revendication 1, dans lequel le substrat est une épissure entre deux ou plus de deux fils, une pluralité de fils ou un composant électrique.

14. Procédé pour envelopper et sceller un substrat, caractérisé en ce qu'il comprend :

(A) le positionnement, autour du substrat, d'un article (10) doué de reprise de forme à chaud comprenant une feuille (12) de matière polymérique, ladite feuille étant capable, lorsque de la chaleur lui est appliquée, de prendre une configuration tubulaire à recouvrement ayant un angle de recouvrement compris entre environ 45° et environ 180° et définissant un volume, V1, ladite feuille ayant, à l'une de ses extrémités, un tronçon (14) enroulé de façon involutive, ledit article étant positionné autour du substrat de manière que le tronçon enroulé de façon involutive entoure sensiblement le substrat ; et

(B) le positionnement d'un matériau d'étanchéité (16) de façon qu'il entoure sensiblement ledit substrat à l'intérieur dudit tronçon enroulé de façon involutive, le volume, V2, du matériau d'étanchéité étant au moins égal à la différence entre le volume, V1, et le volume, V3, du substrat devant être enveloppé ;

dans lequel le module à chaud, M'$_{100}$ de ladite feuille et l'indice de fluidité à l'état fondu, MFI, du matériau d'étanchéité sont tels que :

$$M'_{100} \geq \frac{1}{[K1 \times \log MFI] - K2}$$

où K1 est compris entre environ 0,001 et environ 0,015 et K2 est compris entre environ 0,001 et environ 0,020 ;

(C) le chauffage de l'article pour l'amener à effectuer une reprise de forme et à entourer de façon sensiblement complète le substrat ;
et
(D) la continuation du chauffage de l'article pour amener le matériau d'étanchéité à fondre et couler et à sceller sensiblement le volume entier à l'intérieur de l'article ayant effectué la reprise de forme.

15. Ensemble selon la revendication 1, dans lequel le matériau d'étanchéité comprend un gel ayant une pénétration de cône comprise entre 80 et 350 (10$^{-1}$ mm) et un allongement à la rupture d'au moins 50 %.

FIG__1

FIG_2

FIG_3

FIG_4

FIG_5

EP 0 412 091 B1